## Europäisches Patentamt

## European Patent Office

## Office européen des brevets

(19)

(11) Veröffentlichungsnummer: **0 103 832**
**B1**

(12) **EUROPÄISCHE PATENTSCHRIFT**

(45) Veröffentlichungstag der Patentschrift:
24.05.89

(51) Int. Cl.⁴: **B 29 C 49/20**, B 60 K 15/02

(21) Anmeldenummer: 83108984.2

(22) Anmeldetag: 12.09.83

(54) Verfahren zum Herstellen eines mit Öffnungen versehenen Hohlkörpers aus thermoplastischem Kunststoff.

(30) Priorität: 15.09.82 DE 3234180

(43) Veröffentlichungstag der Anmeldung:
28.03.84 Patentblatt 84/13

(45) Bekanntmachung des Hinweises auf die Patenterteilung:
24.05.89 Patentblatt 89/21

(84) Benannte Vertragsstaaten:
AT DE FR IT

(56) Entgegenhaltungen:
EP-A- 0 008 964
DE-A- 1 455 496
FR-A- 2 494 176

PATENTS ABSTRACTS OF JAPAN, Band 4, Nr. 33 (M-3) [515], 21. März 1980
PATENTS ABSTRACTS OF JAPAN, Band 4, Nr. 154 (M-38) [636], Seite 75, 28. Oktober 1980

(73) Patentinhaber: K. Kurz Hessental GmbH & Co. KG,
Karl-Kurz-Strasse, D-7170 Schwäbisch Hall 4 (DE)

(72) Erfinder: Rädler, Helmut, Dipl.-Ing.,
Panoramastrasse 15, D-7178 Michielsbach/Bilz (DE)

(74) Vertreter: Patentanwälte Dr. Ing. Eugen Maier Dr. Ing. Eckhard Wolf, Eugensplatz 5 Postfach 13 10 01,
D-7000 Stuttgart 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren nach dem Oberbegriff des Patentanspruchs 1.

Werden nach diesem Verfahren Kraftstoffbehälter hergestellt, die am Boden einen Beruhigungstopf aufweisen, so besteht bei diesen Kraftstoffbehältern der Nachteil, daß sie am Boden Schweißnähte aufweisen, die von der Verbindung des Beruhigungstopfes mit dem Boden des Kraftstoffbehälters herrühren. Hiermit ist die Gefahr von Undichtigkeiten verbunden, die bei Kraftstoffbehältern schwerwiegende Folgen haben können.

Ein Verfahren der vorgenannten Art ist aus der DE-A1 3 042 926 bekannt. Nachteilig ist bei diesem Verfahren, daß der schlauchförmige schlaffe Vorformling an eine Seitenfläche des Beruhigungstopfes angepreßt und mit diesem verschweißt wird, ehe der Vorformling mittels in die geschlossene Blasform eingeblasener Druckluft aufgeweitet wird, so daß der Vorformling mitsamt dem an ihm haftenden, von dem Haltedorn gelösten Beruhigungstopf aufgeblasen und an die Wandung der Blasform gepreßt wird. Außerdem wird bei diesem Verfahren der Vorformling beim Anpressen an den Beruhigungstopf in dessen Umgebung unter Verringerung seiner Schichtdicke gedehnt, so daß beim Aufblasen die Gefahr der Faltenbildung und damit die Gefahr einer ungleichmäßigen Wandstärke des Kraftstoffbehälters besteht.

Der Erfindung liegt die Aufgabe zugrunde, dieses bekannte Verfahren zu vereinfachen, insbesondere solche Schweißstellen zu vermeiden, den Beruhigungstopf sicher im Kraftstoffbehälter zu verankern und zu seinem Einbau Halte- und Anpreßorgane zu verwenden, zu deren Einführung in den Vorformling keine zusätzlichen, im weiteren Verfahren wieder zu verschließende Öffnungen benötigt werden.

Diese Aufgabe wird gemäß der Erfindung mittels eines Verfahrens gelöst, das die kennzeichnenden Merkmale des Anspruchs 1 aufweist. Vorteilhafte Weiterbildungen dieses Verfahrens ergeben sich aus den Unteransprüchen.

Das erfindungsgemäße Verfahren wird anhand der Zeichnung erläutert, in der die zur Durchführung des Verfahrens verwendete Vorrichtung in schematischer Weise in zwei Phasen des Verfahrens dargestellt ist. Es zeigen

Fig. 1 einen Längsschnitt durch einen Teil der Blasform nach der Übernahme des in dem noch nicht aufgeblasenen Vorformling befindlichen Beruhigungstopfes durch den in den Vorformling eingeführten Haltedorn,

Fig. 2 denselben Längsschnitt nach aus der Blasform zurückgezogener, den Beruhigungstopf unterstützender Vorrichtung in der Phase des Anpressens des Beruhigungstopfes an die Innenfläche des aufgeblasenen Hohlkörpers,

Fig. 3 ein Schnitt durch den Beruhigungstopf in einer von der Darstellung in Fig. 2 abweichenden Ausbildung.

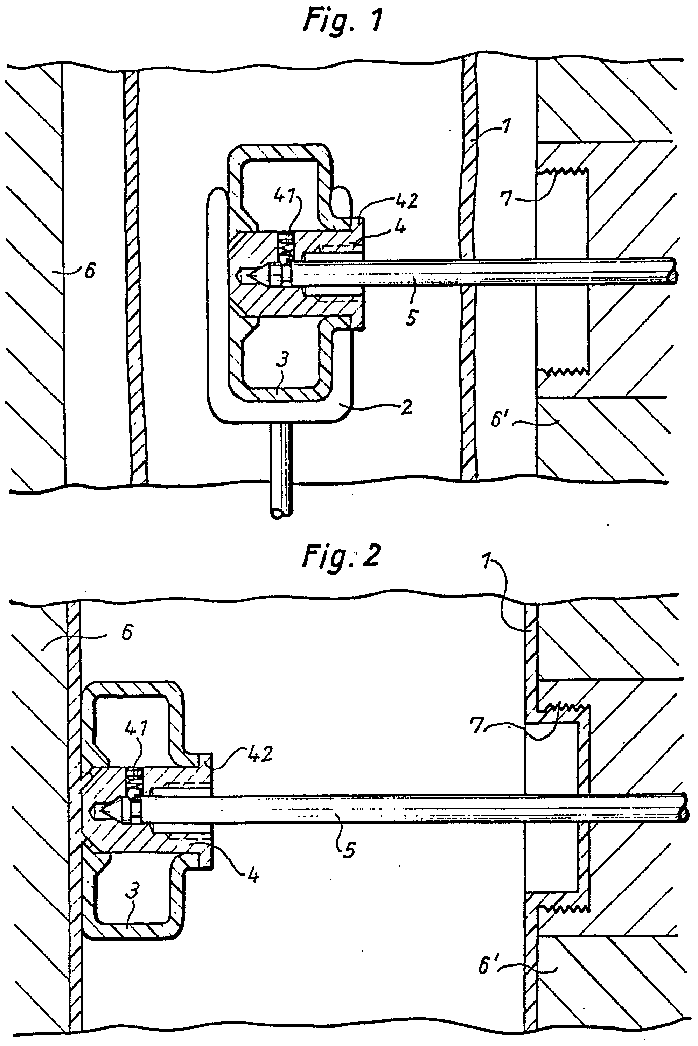

Der Beruhigungstopf 3, in den gemäß dem Verfahren nach den Figuren 1 und 2 zuvor das Formstück 4 eingesetzt wurde, wird zwischen den beiden Backen 6 und 6' der Blasform von einer Stange 2 mit gabelförmigem Ende unterstützt. Darauf wird der aus einem Extruder austretende schlauchförmige Vorformling 1 über den Beruhigungstopf 3 herabgesenkt und der Haltedorn 5 von der Seite her in den Vorformling eingestochen und in eine Aussparung des Formstückes 4 eingeführt. Hierbei wird der Haltedorn 5 entweder mit dem an seinem vorderen Ende eingeschnittenen Gewinde in das Formstück 4 eingeschraubt oder mittels einer Vorrichtung 41, die einen in eine Ringnut des Haltedorn einrastenden gefederten Sperrkörper aufweist, in dem Formstück 4 festgehalten. Darauf wird die den Beruhigungstopf 3 unterstützende Stange 2 nach unten abgezogen, die Blasform 6, 6' geschlossen, der Vorformling 1 mittels Druckluft an die Blasform 6, 6' angedrückt und der Beruhigungstopf 3 mittels des Haltedorns 5 und des mit einem Kragen 42 gegen den Beruhigungstopf 3 anliegenden Formstücks 4 gegen den Backen 6 der Blasform angepreßt, so daß in den zwischen dem Rand der Bodenaussparung des Beruhigungstopfes 3 und dem Formstück 4 vorhandenen Ringspalt noch plastisches Material eindringt und den Beruhigungstopf 3 so zuverlässig verankert. Da bei dieser Art der Verankerung auf eine Schweißverbindung verzichtet werden kann, kann der Beruhigungstopf aus jedem beliebigen Material bestehen. Nun wird vor dem Öffnen der Blasform 6, 6' der Haltedorn 5 zurückgezogen, der Hohlkörper der Blasform entnommen, an der einen Gewindeansatz 7 aufweisenden Stelle aufgebohrt, so daß das Formstück aus dem Hohlkörper entfernt werden kann. Die dem Beruhigungstopf gegenüberliegende, mit einem Gewindeansatz versehene Öffnung dient vorteilhafterweise zum Anschluß des Gebers für die Tankinhaltsanzeigevorrichtung.

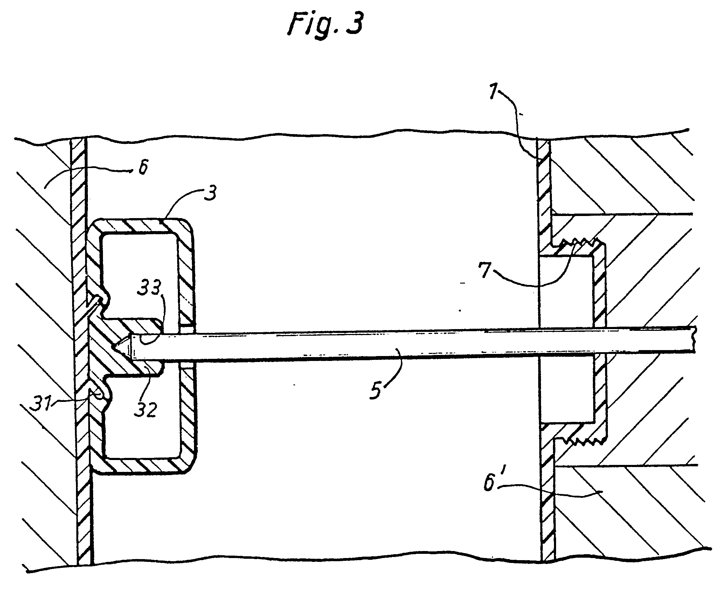

Bei Verwendung eines Beruhigungstopfes gemäs Fig. 3 weist der Boden des Beruhigungstopfes hinterschnittene randoffene Aussparungen 31 auf, in die beim Anpressen des Beruhigungstopfes an die Seitenwand des noch plastischen Hohlkörpers 1 Kunststoff eindringt und so den Beruhigungstopf verankert. An der Bodeninnenseite ist ein Ansatz 32 mit einer Aussparung 33 vorgesehen, in die das freie Ende des Haltedorns 5 eingreift. Die Aussparung 33 ist vorteilhafterweise mehreckig ausgebildet, um den Beruhigungstopf mittels des Haltedorns 5 in die gewünschte Lage bringen zu können.

## Patentansprüche

1. Verfahren zum Herstellen eines mit Öffnungen versehenen Hohlkörpers aus thermoplastischem Kunststoff, bei dem ein schlauchförmiger Vorformling (1) in eine mehrteilige Blasform (6) eingeführt und nach dem Schließen derselben durch ein Druckmittel aufgeblasen wird, und bei dem mindestens ein vorgefertigtes, von einer längsverschiebbaren Haltevorrichtung (2) in der offenen Blasform gehaltenes, mit einem lösbaren Haltekopf versehenes Einbauteil (3), beispielsweise ein Beruhigungstopf im Falle eines Kraftstof-

behälters, vor dem Aufblasen in den Vorformling (1) eingebracht und mit einem Teil der Innenwandung des durch den über das Einbauteil abgesenkten Vorformling (1) gebildeten Hohlkörpers verbunden wird, dadurch gekennzeichnet, daß das Einbauteil (3) vor dem Aufblasen des Vorformlings (1) von einem den Vorformling (1) einseitig durchstechenden Haltedorn (5) übernommen, die Haltevorrichtung (2) aus der Blasform (6) zurückgezogen, das Einbauteil (3) nach dem Aufblasen des Vorformlings (1) in der geschlossenen Blasform (6) mittels des Haltedorns (5) gegen den noch plastischen Vorformling (1) gepreßt und der Haltedorn (5) aus der Blasform (6) zurückgezogen wird.

2. Verfahren nach Anspruch 1, dadurch gekennzeichnet, daß die Blasform (6) an der für die Einführung des Haltedorns (5) vorgesehenen Stelle eine Einsenkung mit einem Innengewinde (7) aufweist.

3. Verfahren nach einem der Ansprüche 1 und 2, dadurch gekennzeichnet, daß das Einbauteil (3) eine das freie Ende des Haltedorns (5) aufnehmende Aussparung und an der mit dem gegen die Wandung der Blasform (6) anliegenden Vorformling (1) zu verbindenden Außenfläche mindestens eine randoffene, Hinterschneidungen aufweisende Aussparung aufweist.

4. Verfahren nach einem der Ansprüche 1 bis 3, dadurch gekennzeichnet, daß der mit dem Einbauteil (3) lösbar verbundene Haltekopf (4) einen gegen einen Ringflansch des Einbauteils (3) anliegenden Kragen (42), eine kegelstumpfförmige Stirnfläche und eine Vorrichtung (41) zum Festhalten des Haltedorns (5) aufweist und der gegen eine Seitenwand des Hohlkörpers (1) gepreßte Boden des Einbauteils (3) eine die kegelstumpfförmig ausgebildete Stirnfläche des Haltekopfes (4) aufnehmende Aussparung aufweist.

5. Verfahren nach Anspruch 4, dadurch gekennzeichnet, daß der Haltekopf (4) zum Festhalten des Haltedorns (5) einen Schnappverschluß (41) aufweist.

6. Verfahren nach Anspruch 4, dadurch gekennzeichnet, daß der Haltekopf (4) ein Innengewinde zur Aufnahme des Haltedorns (5) aufweist.

## Claims

1. Method for producing thermoplastic hollow bodies with apertures, wherein a parison (1) is introduced into a multipiece blow mould (6) and after the latter has been closed is inflated by a pressure medium, and wherein at least one prefabricated built-in component (3), for example a splash baffle in the case of a fuel tank, held in the open blow mould by a longitudinally movable holding fixture (2) and equipped with a detachable retaining head, is inserted in the parison (1) prior to inflation and connected to a section of the inside wall of the hollow body formed by the parison (1) lowered past the built-in component, characterised in that prior to inflation of the parison (1), a holding mandrel (5) which pierces the parison (1) on one side takes the built-in component (3), the holding fixture (2) is withdrawn from the blow mould (6), following inflation of the parison (1) in the closed blow mould (6) the built-in component (3) is pressed by means of the holding mandrel (5) against the still plastic parison (1) and the holding mandrel (5) is withdrawn from the blow mould (6).

2. Method according to Claim 1, characterised in that at the place provided for introducing the holding mandrel (5) the blow mould (6) exhibits a sunk cavity with an internal thread (7).

3. Method according to one of Claims 1 and 2, characterised in that the built-in component (3) has a recess which receives the free end of the holding mandrel (5) and on the external surface to be connected to the parison (1) bearing on the wall of the blow mould (6) said component (3) has at least one peripherally open recess which exhibits undercuts.

4. Method according to one of Claims 1 to 3, characterised in that the retaining head (4) detachably joined to the built-in component (3) has a collar (42) which bears on a ring flange of the built-in component (3), a truncated cone-shaped end face and a device (41) for securing the holding mandrel (5), and the base of the built-in component (3) pressing against a side wall of the hollow body (1) exhibits a recess which receives the truncated cone-shaped end face of the retaining head (4).

5. Method according to Claim 4, characterised in that the retaining head (4) has a spring catch (41) for securing the holding mandrel (5).

6. Method according to Claim 4, characterised in that the retaining head (4) has an internal thread for receiving the holding mandrel (5).

## Revendications

1. Procédé pour la fabrication d'un corps creux en matière thermoplastique muni d'ouvertures, dans lequel une ébauche (1) en forme de boyau est introduite dans un moule de soufflage (6) en plusieurs parties et est gonflée, après la fermeture de ce dernier, par un fluide sous pression, et dans lequel au moins une pièce à incorporer préfabriquée (3), par exemple un pot stabilisateur dans le cas d'un réservoir à carburant, munie d'une tête de retenue amovible et maintenue dans le moule de soufflage ouvert par un dispositif de retenue (2) susceptible de coulisser longitudinalement, est introduite dans l'ébauche (1) avant le gonflage et reliée à une partie de la paroi intérieure du corps creux formé par l'ébauche (1) abaissée sur la pièce à incorporer, caractérisé en ce qu'avant le gonflage de l'ébauche (1) la pièce à incorporer (3) est reprise par un mandrin de retenue (5) introduit d'un côté dans l'ébauche (1), puis le dispositif de retenue (2) est retiré du moule de soufflage (6) et, après le gonflage de l'ébauche (1) dans le moule de soufflage fermé (6), la pièce à incorporer (3) est pressée au moyen du mandrin de retenue (5) contre l'ébauche encore plastique (1) et le mandrin de retenue (5) est retiré du moule de soufflage (6).

2. Procédé selon la revendication 1, caractérisé en ce que le moule de soufflage (6) présente, à l'endroit prévue pour l'introduction du mandrin de retenue (5), un enfoncement muni d'un taraudage (7).

3. Procédé selon la revendication 1 ou 2, caractérisé en ce que la pièce à incorporer (3) présente un évidement recevant l'extrémité libre du mandrin de retenue (5) et, au niveau de sa surface extérieure à relier à l'ébauche (1) prenant appui contre la paroi du moule de soufflage (6), au moins un évidement marginal présentant des parties en contre-dépouille.

4. Procédé selon l'une quelconque des revendications précédentes, caractérisé en ce que la tête de retenue (4) reliée de manière amovible à la pièce à incorporer (3) présente une collerette (42) prenant appui contre une bride annulaire de la pièce à incorporer (3), une face frontale tronconique et un dispositif (41) pour retenir le mandrin de retenue (5) et en ce que le fond de la pièce à incorporer (3) pressé contre une paroi latérale du corps creux (1) présente un évidement recevant la face frontale tronconique de la tête de retenue (4).

5. Procédé selon la revendication 4, caractérisé en ce que la tête de retenue (4) présente une fermeture à déclic (41) pour retenir le mandrin de retenue (5).

6. Procédé selon la revendication 4, caractérisé en ce que la tête de retenue (4) présente un taraudage pour recevoir le mandrin de retenue (5).

## Fig. 1

## Fig. 2

# Fig. 3